# EUROPEAN PATENT SPECIFICATION

(11) **EP 0 787 769 B1**
(45) Date of publication and mention of the grant of the patent: **25.09.2002**
(21) Application number: 97300413.8
(22) Date of filing: 23.01.1997
(51) Int. Cl.: C08L 67/02, C08L 69/00

(54) **Impact modified polycarbonate/polyester compositions with high weather resistance**
Schlagzähe Polycarbonat-/ Polyestermischungen mit hoher Wetterbeständigkeit
Compositions résistantes aux chocs et aux intempèries à base de polyester et de polycarbonate

(30) Priority: 02.02.1996 US 595698
(43) Date of publication of application: 06.08.1997
(73) Proprietor: GENERAL ELECTRIC COMPANY, Schenectady, NY 12345 (US)
(72) Inventor: Whalen, David, Mount Vernon, Indiana 47620 (US)
(74) Representative: Szary, Anne Catherine, Dr.

(56) References cited:
- EP-A- 0 244 857
- EP-A- 0 265 275
- EP-A- 0 284 086
- WO-A-90/10674
- FR-A- 2 197 930
- US-A- 4 493 921
- US-A- 4 656 225
- US-A- 4 780 506
- DATABASE WPI Section Ch, Week 9150 Derwent Publications Ltd., London, GB; Class A18, AN 91-365124 XP002069316 & JP 03 244658 A (TOYOBO KK) , 31 October 1991
- DATABASE WPI Section Ch, Week 8506 Derwent Publications Ltd., London, GB; Class A18, AN 85-033536 XP002069311 & JP 59 226054 A (SUMITOMO NAUGATUCK KK) , 19 December 1984
- DATABASE WPI Section Ch, Week 8845 Derwent Publications Ltd., London, GB; Class A18, AN 88-318196 XP002083200 & JP 63 234055 A (TORAY IND INC) , 29 September 1988
- DATABASE WPI Section Ch, Week 8642 Derwent Publications Ltd., London, GB; Class A13, AN 86-275172 XP002069313 & JP 61 200107 A (JAPAN SYNTHETIC RUBBER CO LTD), 4 September 1986
- DATABASE WPI Week 8932 Derwent Publications Ltd., London, GB; AN 89-230913 XP002074850 & JP 01 165658 A (TEIJIN LTD.) , 29 June 1989

## Description

### Field of the Invention

The present invention relates to impact modified thermoplastic resin compositions, and more particularly relates to impact modified compositions containing a blend of polyester resin and polycarbonate resin.

### Background of the Invention

Thermoplastic resin compositions of polyester resins, polycarbonate resins and blends of polyester resin and polycarbonate resin that include an impact modifier, e.g., an acrylic core-shell copolymer, see, e.g., U.S. Patent No. 4,264,487, or an acrylonitrile/ethylene-propylene-non-conjugated diene monomer/styrene graft copolymer, see, e.g., U.S. Patent No. 4,780,506, are known. While such impact modified resin compositions exhibit improved impact resistance, the utility of such compositions in outdoor applications is often limited by the resistance of the resin composition to weathering, i.e., the impact modified resin compositions exhibit a loss of properties such as, e.g., a deterioration in impact resistance, and an undesirable change in color, i.e., yellowing, upon prolonged exposure to ultraviolet radiation and temperature cycling in the presence of moisture.

### Summary of the Invention

The thermoplastic resin composition of the present invention comprises:
(a) a thermoplastic resin, said resin comprising
   a mixture of a polyester resin and a polycarbonate resin;
(b) at least 1 weight percent, based on the total weight of the thermoplastic resin composition, of a polyolefin rubber graft copolymer comprising a polyolefin rubber substrate comprising an ethylene/propylene copolymer or an ethylene/propylene/non-conjugated diene monomer terpolymer and a graft polymer grafted onto the polyolefin rubber substrate, said graft polymer comprising repeating units derived from a monoethylenically unsaturated monomer; and
(c) at least 1 weight percent, based on the total weight of the thermoplastic resin composition, of a core-shell copolymer comprising a core portion having repeating units derived from a monoethylenically unsaturated acrylate monomer or from butadiene and having a glass transition temperature below about 10°C and a shell portion having repeating units derived from a monoethylenically unsaturated monomer and having a glass transition temperature of greater than or equal to 10°C.

The composition of the present invention exhibits high impact resistance and provides a surprising improvement in weatherability, particularly with regard to color stability and retention of impact properties.

### Detailed Description of the Invention

### Polyester Resin

Polyester resins suitable for use in the present invention, methods for making polyester resins and the use of polyester resins in thermoplastic molding compositions are well known in the art, see, generally, U.S. Patent Nos. 2,465,319.

Suitable polyester resins include linear polyester resins, branched polyester resins, copolymeric polyester resins and mixtures or blends thereof. Suitable linear polyester resins include, e.g., poly(alkylene phthalate)s such as, e.g., poly(ethylene terephthalate) ("PET"), poly(butylene terephthalate), ("PBT"), poly(cycloalkylene phthalate)s such as, e.g., poly(cyclohexanedimethanol terephthalate) ("PCT"), poly(alkylene naphthalate)s such as, e.g., poly(butylene-2,6-naphthalate) ("PBN") and poly(ethylene-2,6-naphthalate) ("PEN"), poly(alkylene dicarboxylates) such as, e.g., poly(cyclohexane dicarboxylate) Suitable copolymeric polyester resins include, e.g., polyesteramide copolymers, cyclohexanedimethanol-terephthalic acid-isophthalic acid copolymers and cyclohexanedimethanol-terephthalic acid-ethylene glycol ("PETG") copolymers.

In a preferred embodiment of the present invention, the polyester resin is selected from PBT, PET and PCT resins and mixtures thereof.

In a more highly preferred embodiment of the present invention, the polyester resin is PBT or PET resin or a mixture thereof.

In a preferred embodiment, the polyester resin has a number average molecular weight of from 10,000 to 100,000, as determined by gel permeation chromatography using a polystyrene standard.

Suitable polyester resins are commercially available, e.g., VALOX™ 315 polybutylene terephthalate resin from General Electric Company, CRYSTAR™ PET resins from DuPont.

### Aromatic Polycarbonate Resin

Aromatic polycarbonate resins suitable for use in the present invention are well known in the art, methods of making aromatic polycarbonate resins and the use of aromatic polycarbonate resins in thermoplastic molding compounds, see, generally, U.S Patent Nos. 4,034,016, 4,098,750 and 3,169,121.

Aromatic polycarbonate resins are generally prepared by reacting a dihydric phenol, e.g., 2, 2-bis-(4-hydroxyphenyl) propane ("bisphenol A"), 2,2-bis(3,5-dimethyl-4-hydroxyphenyl)propane, bis(2-hydroxyphenyl) methane, 2, 6-dihydroxy naphthalene, hydroquinone, 2,4'-dihydroxyphenyl sulfone and 4, 4'-dihydroxy-3, 3-dichlorophenyl ether, with a carbonate precursor, e.g., carbonyl bromide and carbonyl chloride, a halogen formate, e.g., bishaloformates of dihydric phenols such as hydroquinone and bishaloformates of glycols such as neopentyl glycol and ethylene glycol, or a carbonate ester, e.g., diphenyl carbonate, dichlorophenyl carbonate, dinaphthyl carbonate, phenyl tolyl carbonate and ditolyl carbonate.

Suitable aromatic polycarbonate resins include linear aromatic polycarbonate resins, branched aromatic polycarbonate resins, and poly(ester-carbonate) resins.

Suitable linear aromatic polycarbonates resins include, e.g., bisphenol A polycarbonate resin.

Suitable branched aromatic polycarbonates are made, e.g., by reacting a polyfunctional aromatic compound , e.g., trimellitic anhydride, trimellitic acid, trimesic acid, trimellityl trichloride, with a dihydric phenol and a carbonate precursor to form a randomly branching polymer.

Suitable poly(ester-carbonate) copolymers are made, e.g., by reacting a difunctional carboxylic acid, phthalic acid, terephthalic acid, 1, 4-naphthalic acid, glycolic acid, lactic acid, camphoric acid, 12-hydroxysteric acid, with a dihydric phenol and a carbonate precursor.

In a preferred embodiment, the aromatic polycarbonate is bisphenol A polycarbonate resin.

In a preferred embodiment, the weight average molecular weight ,as determined by gel permeation chromatography relative to a polystyrene standard, of the polycarbonate resin is from 20,000 to 350,000, more preferably from 40,000 to 80,000.

Suitable aromatic polycarbonate resins are commercially available, e.g., LEXAN™ 101 and LEXAN™ 121 bisphenol A polycarbonate resins from General Electric Company.

In a preferred embodiment, the composition of the present invention comprises from 70 to 98 weight percent ("wt%"), more preferably from 75 to 95 wt% and most preferably from 85 to 90 wt%, of the thermoplastic resin.

In a preferred embodiment, the mixture of polyester resin and an aromatic polycarbonate resin comprises from 15 to 80 wt% , more preferably from 40 to 60 wt% and most preferably from 45 to 55 wt% of the aromatic polycarbonate resin and from 20 to 85 wt%, more preferably from 40 to 60 wt% and most preferably from 45 to 55 wt% of the polyester resin, wherein the weight percentages are based on the combined amount of the aromatic polycarbonate resin and the polyester resin. Alternatively, when expressed on the basis of the total weight of the composition of the present invention, it is preferred that the composition comprises from 15 to 80 wt%, more preferably from 35 to 65 wt%, and most preferably from 45 to 55 wt% of the aromatic polycarbonate resin; and from 20 to 85 wt%, more preferably from 35 to 65 wt%, and most preferably from 45 to 55 wt% of the polyester resin.

In a highly preferred embodiment, the thermoplastic resin is a mixture of bisphenol A polycarbonate resin and poly(butylene terephthalate) resin or poly(ethylene terephthalate) resin.

### Polyolefin Rubber Graft Copolymer

Suitable polyolefin rubber graft copolymers, methods of making such graft copolymers and the use of such graft copolymers in combination with polycarbonate resins and polyester resins are known in the art, see, e.g., U.S. Patent Nos. 4,550,138, 4,485,212, and 4,493,921.

In a preferred embodiment, the polyolefin rubber graft copolymer comprises from about 30 wt% to about 80 wt% polyolefin rubber substrate and from about 20 wt% to about 70 wt% polymer graft.

The rubbery substrate portion of the polyolefin rubber graft copolymer comprises an ethylene/propylene rubber (EPR) copolymer or an ethylene/propylene/non-conjugated diene monomer-type (EPDM) terpolymer wherein the non-conjugated diene monomer is selected from, e.g., ethylidene norbornene, dicyclopentadiene, hexadiene or phenyl norbornene.

In a preferred embodiment, the polyolefin rubber substrate is derived from an ethylene/propylene/non-conjugated diene monomer terpolymer wherein the non-conjugated diene is ethylidene norbornene.

Suitable monoethylenically unsaturated monomers from which to derive the graft polymer portion of the polyolefin rubber graft copolymer include, e.g., acrylic acid, methacrylic acid, (C₁-C₁₂)alkyl (meth)acrylate monomers, (C₄-C₁₂)cycloalkyl (meth)acrylate monomers, (meth)acrylamide monomers, vinyl aromatic monomers, vinyl esters such as, e.g., vinyl acetate and vinyl propionate, and alkenoic nitriles such as, e.g., acrylonitrile and methacrylonitrile. Mixtures of the foregoing monomers are also suitable. As used herein, the term "(C₁-C₁₂)alkyl" means a straight or branched alkyl substituent group having from 1 to 12 carbon atoms per group, the term "(C₄-C₁₂)cycloalkyl" means a cyclic alkyl substituent group having from 4 to 12 carbon atoms per group, the term "(meth)acrylate" refers collectively to acrylates and methacrylates, the term "(meth)acrylamide" refers collectively to acrylamides and methacrylamides, the terminology "monoethylenically unsaturated" means having a single site of ethylenic unsaturation per molecule and "polyethlenically unsaturated" means having two or more sites of ethylenic unsaturation per molecule.

Suitable vinyl aromatic monomers include, e.g., styrene and substituted styrenes, e.g., alpha-methyl styrene, vinyl toluene, vinyl xylene, trimethyl styrene, chlorostyrene, dichlorostyrene bromostyrene, and mixtures thereof.

In a preferred embodiment, the graft polymer portion of the polyolefin rubber graft copolymer is derived from a mixture of an alkenoic nitrile, most preferably acrylonitrile, and a vinyl aromatic monomer, most preferably styrene.

In a highly a preferred embodiment, the polyolefin rubber graft copolymer of the composition of the invention is comprises an ethylene/propylene/non-conjugated diene monomer terpolymer substrate wherein the non-conjugated diene is ethylidene norbornene and having a graft copolymer comprising repeating units derived from acrylonitrile and styrene grafted onto the substrate.

Suitable polyolefin rubber graft copolymers are commercially available, e.g., ROYALTUF™ P372 acrylonitrile/EPDM/styrene graft copolymer from Uniroyal Chemical Co., for use as impact modifiers in thermoplastic resin compositions.

In a preferred embodiment, the composition of the present invention comprises from 1 to 25 wt%, more preferably from 2 to 15 wt% and most preferably from 5 to 10 wt% polyolefin rubber graft copolymer, based on the total weight of the composition.

### Core-Shell Copolymer

Core-shell copolymers, methods of making core-shell copolymers and the use of core-shell copolymers as impact modifiers in combination with polycarbonate resins and polyester resins are known in the art, see, e.g., U.S. Patent Nos. 3,864,428, 4,180,434, 4,257,937 and 4,264,487.

Suitable core-shell copolymers are those that include a rubbery "core" having a glass transition temperature ("T_{g}") below about 10°C and having repeating units derived from a monoethylenically unsaturated acrylate monomer or from poly(butadiene) and a rigid "shell" having a T_{g} of greater than or equal to about 10° C and having repeating units derived from a monoethylenically unsaturated monomer.

As used herein, the T_{g} of a copolymer is the T_{g} value of copolymer as measured by differential scanning calorimetry (heating rate 20°C/minute, T_{g} value determined at inflection point).

In a preferred embodiment, the core-shell copolymer comprises from about 10 wt% to about 90 wt% core and from about 10 wt% to about 90 wt% shell.

Suitable acrylate monomers having a homopolymer T_{g} of less than 10°C include, e.g., ethyl acrylate, butyl acrylate, n-hexyl acrylate.

Suitable monoethylenically unsaturated monomers having a homopolymer T_{g} of greater than or equal to 10°C include, e.g., methyl methacrylate, ethyl methacrylate, propyl methacrylate, isopropyl methacrylate and butyl methacrylate, styrene, acrylonitrile, and preferably methyl methacrylate, ethyl methacrylate, butyl methacrylate, or a mixture thereof.

The shell portion may independently include a minor amount of repeating units derived from a polyethylenically unsaturated "crosslinking" monomer, e.g., butylene diacrylate or divinyl benzene, and a minor amount of repeating units derived from a polyethylenically unsaturated "graftlinking" monomer wherein the sites of ethylenic unsaturation have substantially different reactivities, e.g., allyl methacrylate or diallyl maleate.

The core and the shell portions may each independently further include repeating units derived from other monoethylenically unsaturated monomers such as vinyl aromatic monomers, e.g., styrene, alpha-methyl styrene, vinyl toluene, vinyl xylene, trimethyl styrene, chlorostyrene, dichlorostyrene bromostyrene and mixtures thereof, provided the respective limitations on T_{g} are satisfied.
In a preferred embodiment, the core of the acrylic core-shell copolymer comprises repeating units derived from butyl acrylate and the shell of the acrylic core-shell copolymer comprises repeating units derived from methyl methacrylate and styrene.

Suitable core-shell copolymers are commercially available, e.g., PARALOID™ EXL 3361 copolymer and PARALOID™ EXL 3691 copolymer, each from Rohm and Haas Company, Philadelphia, PA for use as impact modifiers in thermoplastic resin compositions.

In a preferred embodiment, the composition of the present invention comprises from 1 to 25 wt%, more preferably from 2 to 15 wt%, and most preferably from 5 to 10 wt%, of the core-shell copolymer, based on the total weight of the composition.

In a preferred embodiment, the composition of the present invention comprises from 2 to 30 wt%, more preferably from 5 to 25 wt% and most preferably from 10 to 15 wt%, of the combined amount of the core-shell copolymer and polyolefin rubber graft copolymer, based on the total weight of the composition.

In a preferred embodiment, the polyolefin rubber graft copolymer is present at a level of from 10 to 90 wt%, more preferably from 25 to 75 wt% and most preferably from 40 to 60 wt% of the combined amount of the core-shell copolymer and the polyolefin rubber graft copolymer and the core-shell copolymer is present at a level of from 10 to 90 wt%, more preferably from 25 to 75 wt%, and most preferably from 40 to 60 wt% of the combined amount of the core-shell copolymer and the polyolefin rubber graft copolymer.

The composition of the present invention may optionally include other additives known in the art, such as, e.g., reinforcing fillers, pigments, dyes, colorants, flame retardants, antistatic agents, ultraviolet stabilizers and thermal stabilizers.

The materials described in the invention can be molded into useful articles by a variety of means such as injection, extrusion, rotation, and blow molding. The composition of the present invention is particularly well suited for application in articles that are typically subjected to prolonged outdoor exposure and use, such as, e.g., lawn furniture, power tools, recreational vehicles, outdoor enclosures, automotive components and outdoor maintenance equipment components, e.g., tractor hoods, fenders and mower decks.

### Examples

The compositions of Examples 1 and 2 and Comparative Examples 3-5 and C1-C10 were each prepared by mixing the respective components set forth below in TABLE 1 in a polyethylene bag, shaking in a paint shaker for 5 minutes to mix the components, extruding the resultant mixture on a 30 millimeter WP twin screw extruder at a screw rotation of 300 rpm and a barrel temperature of 260°C (500°F) and then pelletizing the resultant extrudate. The pellets so formed were then injection molded at 271°C (520°F) to form test specimens.

In addition to the components set forth in TABLE 1,each of the compositions of Example 1 and Comparative Examples C2 and C3 also contained:
0.2 wt% monozinc phosphate,
0.2 wt% IRGANOX™ 1010 phenolic antioxidant (Ciba-Geigy),and
0.6 wt% TINUVIN™ 234 light stabilizer (Ciba-Geigy);
and each of the compositions of Examples 2-5 and Comparative Examples C3-C10 also contained:
0.15 wt% IRGANOX™ 1010 phenolic antioxidant
(Ciba-Geigy) or ANOX™ 20 phenolic antioxidant,
0.15 wt% IRGAFOS™ 168 phosphite antioxidant (Ciba-Geigy) or
ALKANOX™ phosphite antioxidant, and
0.6 wt% UV 5411 UV light stabilizer (Cytech).

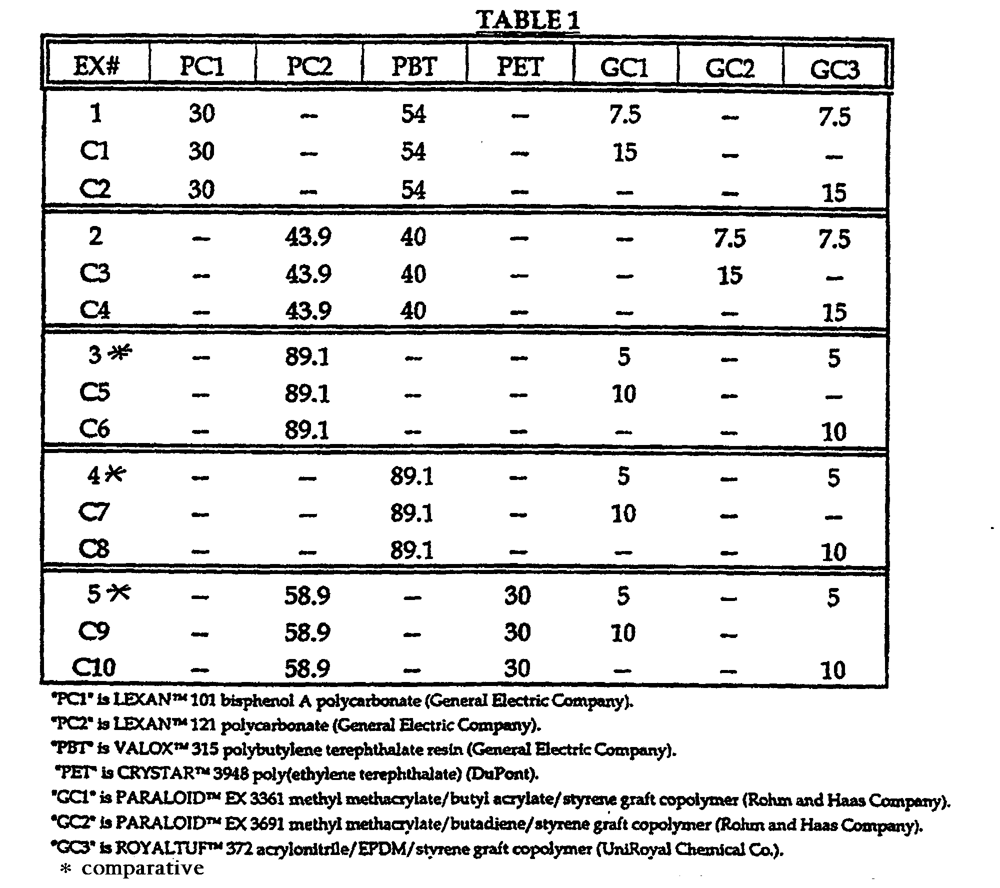

The color retention, Izod impact performance and dart impact performance of the test specimens was determined both before and after accelerated weathering.

Accelerated weathering was conducted in two ways, i.e., in an Atlas C165/DMC equipped with xenon arc lights and in a Q-Panel weatherometer equipped with UV-B bulbs.

The Atlas C165/DMC lights were cycled (using cam #180) on (chamber temperature 89°C) and off (chamber temperature 38°C) at 0.55 Watts per square meter(W/m²) for the length of time indicated in the respective TABLES.

The bulbs of the Q-Panel weatherometer were cycled on and off for alternating intervals of 4 hours on (temperature 60°C) and 4 hours off (temperature 40°C) in the presence of water for the duration of the accelerated weathering treatment Samples were removed from the weatherometer chamber at the exposure times indicated in TABLE 2, 3 and 4 and then tested.

Color measurements were made on an ACS Chromasensor colorimeter at C65 illuminant/2 degrees observer. The color shift between an non-aged sample and an aged sample is reported as a "delta E" value, as measured in CIE-LAB color space.

Izod impact testing was performed according to ASTM D256 at the temperature indicated.

The instrumented dart impact was performed according to ASTM D2763 at the indicated temperature. Total energy to break and percent of the samples which broke in a ductile manner, as defined by no loose shards of sample after impact, are indicated.

Alternatively, the ductility of the samples was evaluated at a series of temperatures. The temperature at which 50% of the samples tested broke in a brittle fracture mode was determined and reported as ductile/brittle transition temperature (" D/B").

The following test results are set forth below in TABLE 2 for the compositions of Example 1 and Comparative Examples C1 and C2:
(a) Izod impact performance, expressed as J/m (foot pounds per inch (ft-lb/in)) as measured prior to accelerated weathering ("Non-Aged");
(b) dart impact total energy, expressed in Nm (foot-pounds (ft-lb)) as measured after accelerated weathering in the Weather-O-Meter ("UV-B Aged") for the length of time indicated, expressed in hours (hr);
(c) dart impact failure mode, expressed as percentage of samples exhibiting ductile failure (% ductile), as measured after accelerated weathering in the Weather-O-Meter ("UV-B Aged") for the length of time indicated, expressed in hours (hr); and
(d) color retention, expressed as a delta E value, as measured after accelerated weathering in the Weather-O-Meter ("UV-B Aged") and in the Atlas C165/DMC ("Xenon Arc Aged"), for the respective length of time indicated, expressed in hours (hr).

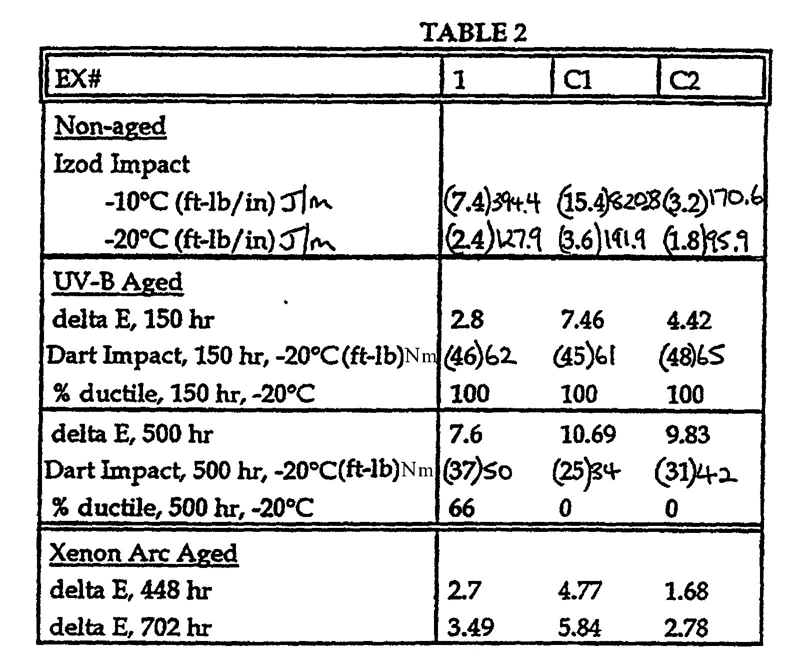

The following test results are set forth below in TABLE 3 for the compositions of Examples 2 Comparative Example 3 and Comparative Examples C3-C6:
(a) Izod impact performance, expressed as J/m (foot pounds per inch (ft-lb/in)) as measured prior to accelerated weathering ("Non-Aged");
(b) dart impact total energy, expressed in Nm (foot-pounds (ft-lb)) as measured after accelerated weathering ("UV-B Aged") for the length of time indicated, expressed in hours (hr);
(c) dart impact failure mode, expressed as percentage of ductile failure ("D/B (%)"), as measured both before ("Non-Aged") and after accelerated weathering in the Weather-O-Meter ("UV-B Aged") for the length of time indicated, expressed in hours (hr); and
(d) color retention, expressed as a delta E value, as measured after accelerated weathering in the Weather-O-Meter ("UV-B Aged") and in the Atlas C165/DMC ("Xenon Arc Aged") for the respective length of time indicated, expressed in hours (hr).

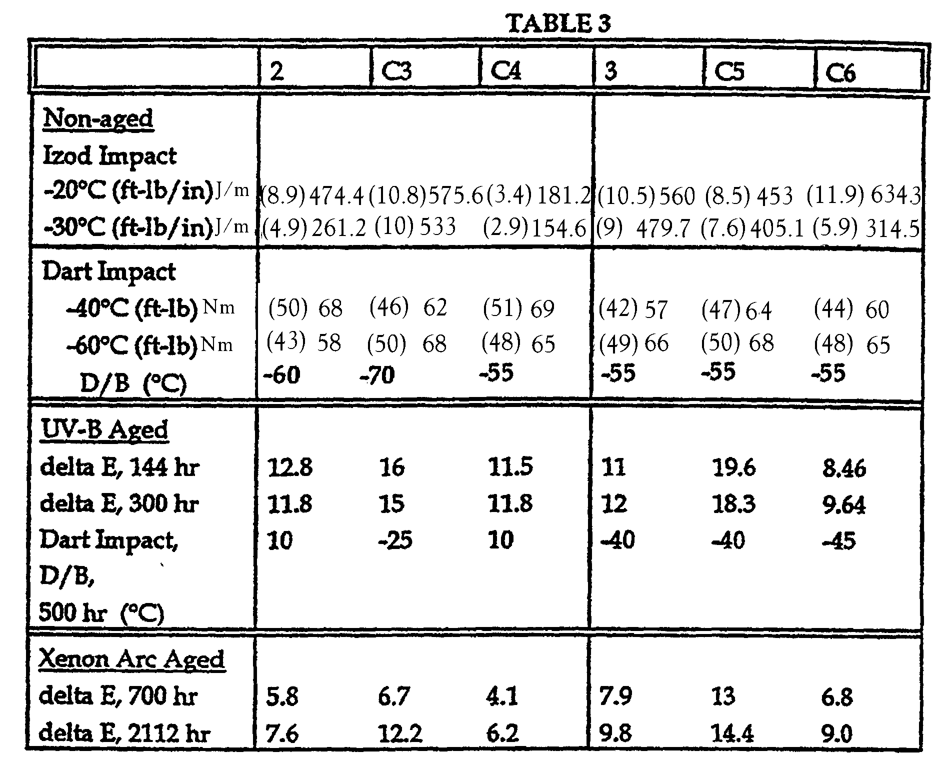

The following test results are set forth in TABLE 4 for the compositions of Comparative Examples 4 and 5 and Comparative Examples C7-C10:
(a) Izod impact performance, expressed as J/m (foot pounds per inch (ft-lb/in)) as measured prior to accelerated weathering ("Non-Aged");
(b) dart impact total energy, expressed in Nm (foo -pounds (ft-lb)) as measured prior to accelerated weathering ("Non-Aged");
(c) dart impact failure mode, expressed as percentage of ductile failure
   (D/B (%)), as measured both before ("Non-Aged") and after accelerated weathering in the Weather-O-Meter ("UV-B Aged") for the length of time indicated, expressed in hours (hr); and
(d) color retention, expressed as a delta E value, as measured after accelerated weathering in the Weather-O-Meter ("UV-B Aged") and in the Atlas C165/DMC ("Xenon Arc Aged"), for the respective length of time indicated, expressed in hours (hr).

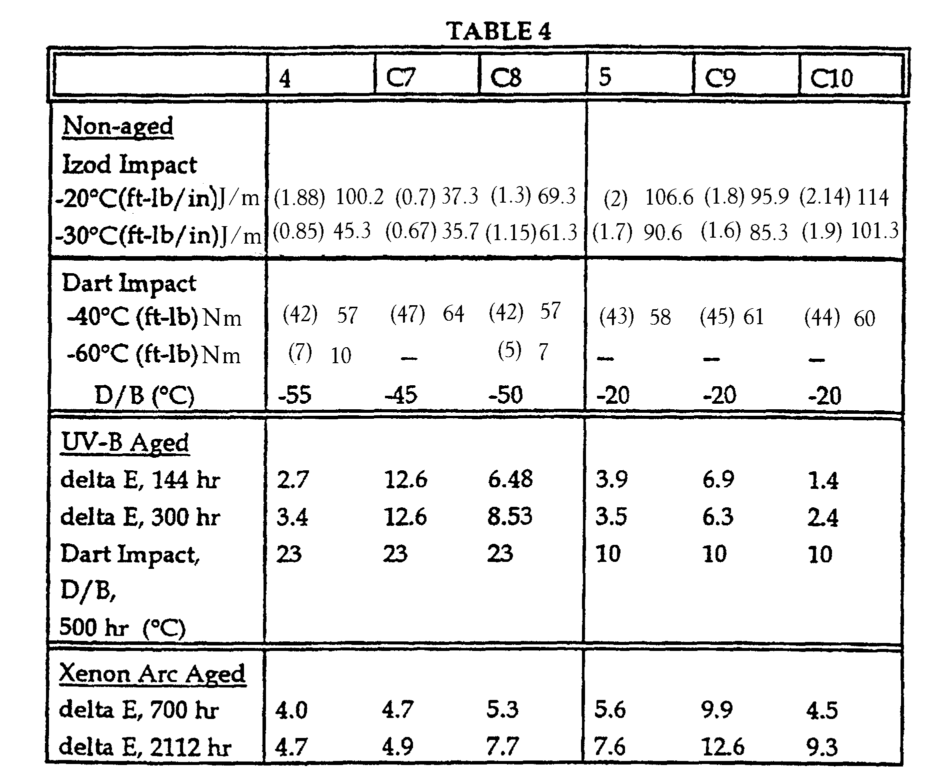

In addition to the improvements in color stability, the impact performance of the invention still displayed reasonable ductility after 500 hours of UV-B exposure, while the control samples all became brittle.

## Claims

1. A thermoplastic resin composition, comprising:
(a) a thermoplastic resin, said resin comprising
a mixture of a polyester resin and a polycarbonate resin;
(b) at least 1 weight percent, based on the total weight of the thermoplastic resin composition, of a polyolefin rubber graft copolymer comprising a polyolefin rubber substrate comprising an ethylene/propylene copolymer or an ethylene/propylene/non-conjugated diene monomer terpolymer and a graft polymer grafted onto the polyolefin rubber substrate, said graft polymer comprising repeating units derived from a monoethylenically unsaturated monomer; and
(c) at least 1 weight percent, based on the total weight of the thermoplastic resin composition, of a core-shell copolymer comprising a core portion having repeating units derived from a monoethylenically unsaturated acrylate monomer or from butadiene and having a glass transition temperature below about 10°C and a shell portion having repeating units derived from a monoethylenically unsaturated monomer and having a glass transition temperature of greater than or equal to 10°C.

2. The composition of claim 1, wherein the thermoplastic resin is mixture of a bisphenol A polycarbonate resin and a polyester resin selected from poly(butylene terephthalate), poly(ethylene terephthalate) and poly(cyclohexane dimethanol terephthalate).

3. The composition of claim 1, wherein the thermoplastic resin is a mixture of from 20 to 85 weight percent polyester resin and from 15 to 80 weight percent polycarbonate resin.

4. The composition of claim 1, wherein the composition comprises from 2 to 15 weight percent of the polyolefin graft copolymer.

5. The composition of claim 1, wherein the polyolefin graft copolymer is an acrylonitrile/ethylene-propylene-non conjugated diene monomer terpolymer/styrene graft copolymer.

6. The composition of claim 5, wherein the non-conjugated diene monomer terpolymer portion of the polyolefin graft copolymer is derived from ethylidene norbornene.

7. The composition of claim 1, wherein the composition comprises from 2 to 15 weight percent of the core-shell copolymer.

8. The composition of claim 1, wherein the core-shell copolymer has a core comprising repeating units derived from butyl acrylate or butadiene and a shell comprising repeating units derived from methyl methacrylate and styrene.

## Patentansprüche

1. Thermoplastische Harzzusammensetzung, umfassend;
(a) ein thermoplastisches Harz, wobei dieses Harz eine Mischung eines Polyesterharzes und eines Polycarbonatharzes umfasst;
(b) mindestens 1 Gew.-%, bezogen auf das Gesamtgewicht der thermoplastischen Harzzusammensetzung, eines Polyolefinkautschuk-Pfropfcopolymers; umfassend ein Polyolefinkautschuk-Substrat, umfassend ein Ethylen/Propylen-Copolymer oder ein Ethylen/Propylen/nicht-konjugiertes Dienmonomer-Terpolymer und ein Pfropfpolymer, das auf das Polyolefinkautschuk-Substrat gepfropft ist, wobei das Pfropfpolymer wiederkehrende Einheiten umfasst, die von einem monoethylenisch ungesättigten Monomer abgeleitet sind, und
(c) mindestens 1 Gew.-%, bezogen auf das Gesamtgewicht der thermoplastischen Harzzusammensetzung, eines Kern-Hülle-Copolymers, umfassend einen Kernabschnitt mit wiederkehrenden Einheiten, abgeleitet von einem monoethylenisch ungesättigten Acrylatmonomer oder von Butadien, und mit einer Glasübergangs-Temperatur unterhalb etwa 10°C und einen Hüllenabschnitt mit wiederkehrenden Einheiten, abgeleitet von einem monoethylenisch ungesättigten Monomer und mit einer Glasübergangs-Temperatur von mehr als oder gleich 10°C.

2. Zusammensetzung nach Anspruch 1, worin das thermoplastische Harz eine Mischung eines Bisphenol A-Polycarbonatharzes und eines Polyesterharzes ist, ausgewählt aus Poly(butylenterephthalat), Poly(ethylenterephthalat) und Poly(cyclohexandimethynolterephthalat).

3. Zusammensetzung nach Anspruch 1, worin das thermoplastische Harz eine Mischung von 20 bis 85 Gew.-% Polyesterharz und von 15 bis 80 Gew.-% Polycarbonatharz ist.

4. Zusammensetzung nach Anspruch 1, worin die Zusammensetzung von 2 bis 15 Gew.-% des Polyolefin-Pfropfcopolymers umfasst.

5. Zusammensetzung nach Anspruch 1, worin das Polyolefin-Pfropfcopolymer ein Acrylnitril/Ethylen-Propylen-nicht konjugiertes Dienmonomer-Terpolymer/Styrol-Pfropfcopolymer ist.

6. Zusammensetzung nach Anspruch 5, worin der nicht konjugierte Dienmonomer-Terpolymerabschnitt des Polyolefin-Pfropfcopolymers von Ethylidennorbornen abgeleitet ist.

7. Zusammensetzung nach Anspruch 1, worin die Zusammensetzung von 2 bis 15 Gew.-% des Kern-Hülle-Copolymers umfasst.

8. Zusammensetzung nach Anspruch 1, worin das Kern-Hülle-Copolymer einen Kern, umfassend wiederkehrende Einheiten, die von Butylacrylat oder Butadien abgeleitet sind, und eine Hülle aufweist, umfassend wiederkehrende Einheiten, die von Methylmethacrylat und Styrol abgeleitet sind.

## Revendications

1. Composition à base de résine thermoplastique, qui comprend :
(a) une résine thermoplastique comprenant un mélange d'une résine de polyester et d'une résine de polycarbonate,
(b) au moins 1 % en poids par rapport au poids total de la composition à base de résine thermoplastique, d'un copolymère greffé à base de caoutchouc de polyoléfine, comprenant un substrat de caoutchouc de polyoléfine comprenant un copolymère d'éthylène et de propylène ou un terpolymère d'éthylène, de propylène et de monomère diène non conjugué, et un polymère de greffage qui est greffé sur le substrat de caoutchouc de polyoléfine, ledit polymère de greffage comprenant des motifs issus d'un monomère monoéthyléniquement insaturé, et
(c) au moins 1 % en poids par rapport au poids total de la composition à base de résine thermoplastique, d'un copolymère coeur-enveloppe comprenant une partie coeur ayant des motifs issus d'un monomère acrylate monoéthyléniquement insaturé ou de butadiène et ayant une température de transition vitreuse inférieure à environ 10 °C, et une partie enveloppe ayant des motifs issus d'un monomère monoéthyléniquement insaturé et ayant une température de transition vitreuse supérieure ou égale à 10 °C.

2. Composition selon la revendication 1, dont la résine thermoplastique est un mélange d'une résine de polycarbonate issu du bisphénol A et d'une résine de polyester choisie parmi le poly(téréphtalate de butylène), le poly(téréphtalate d'éthylène) et le poly(téréphtalate de cyclohexanediméthanol).

3. Composition selon la revendication 1, dont la résine thermoplastique est un mélange de 20 à 85 % en poids de résine de polyester et de 15 à 80 % en poids de résine de polycarbonate.

4. Composition selon la revendication 1, qui renferme 2 à 15 % en poids du copolymère greffé à base de polyoléfine.

5. Composition selon la revendication 1, dans laquelle le copolymère greffé à base de polyoléfine est un copolymère greffé obtenu par greffage de styrène et d'acrylonitrile sur un terpolymère d'éthylène, de propylène et de monomère diène non conjugué.

6. Composition selon la revendication 5, dans laquelle la partie terpolymère à monomère diène non conjugué du copolymère greffé à base de polyoléfine dérive de l'éthylidène norbornène.

7. Composition selon la revendication 1, qui renferme 2 à 15 % en poids du copolymère coeur-enveloppe.

8. Composition selon la revendication 1, dont le copolymère coeur-enveloppe a un coeur comprenant des motifs issus de l'acrylate de butyle ou du butadiène et une enveloppe comprenant des motifs issus du méthacrylate de méthyle et du styrène.
